# EUROPÄISCHE PATENTSCHRIFT

(11) **EP 0 857 416 B1**
(45) Veröffentlichungstag und Bekanntmachung des Hinweises auf die Patenterteilung: **02.05.2002**
(21) Anmeldenummer: 98101582.9
(22) Anmeldetag: 30.01.1998
(51) Int. Cl.: A01G 5/04

(54) **Steckkörper für natürliche Blumen, Zweige und dergleichen**
Holder for natural flowers, branches and the like
Pique-fleurs pour fleurs naturelles, rameaux et similaires

(30) Priorität: 10.02.1997 DE 29702149 U
(43) Veröffentlichungstag der Anmeldung: 12.08.1998
(73) Patentinhaber: Smithers-Oasis Company, Cuyahoga Falls, OH 44221 (US)
(72) Erfinder: Tabbert, Jürgen, 68167 Mannheim (DE)
(74) Vertreter: Fischer, Wolf-Dieter, Dipl.-Ing.

(56) Entgegenhaltungen:
- DE-U- 7 334 810
- DE-U- 29 620 506
- DE-U- 29 702 149

## Beschreibung

Die Erfindung betrifft einen Steckkörper als hydrophiler oder hydrophober Schaumkunststoffkörper zum Anordnen von natürlichen Blumen, Zweigen, Ästen, Früchten sowie Dekorationsmaterial.

Zum Handhaben eines derartigen Schaumkunststoffkörpers wird dieser, nachdem er die entsprechende gewünschte Form, beispielsweise Stangenform, Kugelform für Brautstraußhalter, Kranzform und dergleichen hat, mit einer Schale oder einem sonstigen Halter aus Kunststoff verbunden. Zum Verbinden dienen meistens Drahtgitter oder sonstige Befestigungselemente, um die beiden Gegenstände, nämlich den Schaumkunststoffkörper und die Schale miteinander zu verbinden. An Stelle solcher Schalen aus Kunststoff verwendet man auch Teile aus biologisch abbaubarem Material.

Bekannt sind auch derartige Steckkörper aus Schaumkunststoff, die mit einer wasserfesten Ummantelung aus Kunststoffen oder Lacken versehen sind. Diese Steckkörper dienen insbesondere als Blumenvase, wobei die Blumen, Zweige, Äste od. dgl. in den Schaumkunststoff eingesteckt werden. Es hat sich dabei gezeigt, daß das zur Haltbarkeit notwendige Wasser sich sehr schnell verbraucht und darunter die Blumenhaltbarkeit leidet.

Der Erfindung liegt die Aufgabe zugrunde, einen derartigen Steckkörper so auszubilden, daß eine zusätzliche Frischwasserversorgung für die Pflanzen für eine längere Haltbarkeit geschaffen wird.

Diese Aufgabe wird nach der Erfindung dadurch gelöst, daß im Bodenbereich zwischen Ummantelung und Schaumkunststoffkörper ein Wasservorratsraum vorgesehen ist, der über einen Einfüllstutzen mit außen verbunden ist.

Eine vorteilhafte Ausführungsform besteht darin, daß der Schaumkunststoffkörper im Bereich seiner Oberseite keine Ummantelung aufweist, wobei der Schaumkunststoffkörper im Bereich der fehlenden Ummantelung mit einer Vertiefung versehen ist.

Die Erfindung bringt insbesondere den Vorteil, daß ein einteiliger Gegenstand mit einer hohen Festigkeit der Verbindung erzeugt werden kann und hierbei alle Formen und Größen möglich sind, wobei sich der Schaumkunststoffkörper einfach durch Schneiden und Sägen formen läßt. Es ergibt sich somit eine einfache Herstellung des Gegenstandes. Der insgesamt aus dem Schaumkunststoffkörper und der Ummantelung bestehende Gegenstand ist kompostierbar, wobei das Produkt durch die Ummantelung verstärkt wird. Insbesondere ergibt sich der Vorteil einer zusätzlichen Frischwasserversorgung und damit einer längeren Blumenhaltbarkeit.

Die Erfindung wird in der nachfolgenden Beschreibung anhand des in der Zeichnung dargestellten Ausführungsbeispiels näher erläutert.

Es zeigen,
- Fig. 1: einen Schnitt durch eine erste Ausführungsform eines derartigen ummantelten Steckkörpers,
- Fig. 2: eine weitere Ausführungsform des Gegenstandes.

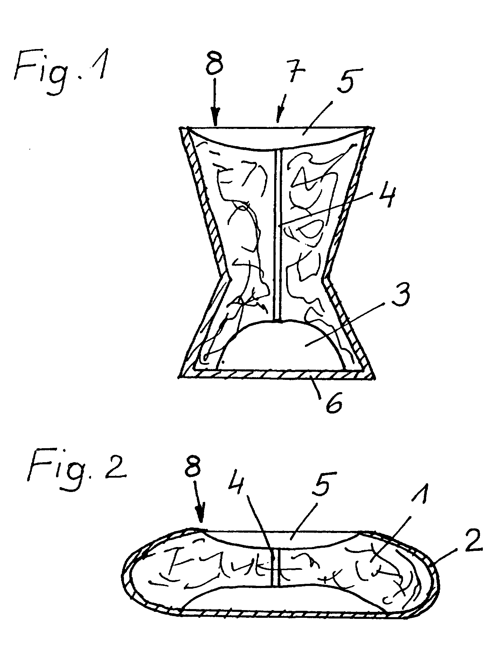

Die in Fig. 1 dargestellte Ausführungsform des Gegenstandes weist im Bodenbereich einen Wasservorratsraum 3 auf, der über einen Einfüllstutzen 4 mit der Oberseite 8 des vasenartigen Gegenstandes als oberen Einfüllpunkt verbunden ist und der durch entsprechendes Ausformen des Schaumkunststoffkörpers 1 gebildet wird. Weiterhin befindet sich im Bereich der oberen Öffnung 7, d.h. in dem Bereich, wo die Ummantelung 2 fehlt, eine Vertiefung 5, von der der Einfüllstutzen 4 zum Wasservorratsraum 3 geführt ist. Das Wasser kann auch beim Einfüllen über den Einfüllstutzen 4 seitlich in den Schaumkunststoffkörper 1 eindringen.

Diese in der Figur 1 dargestellte Ausführungsform eignet sich insbesondere zum Herstellen von Vasen, wobei die Blumen und Zweige u.dgl. im Bereich der oberen Öffnung 7 eingesteckt werden können. Durch die Kapillarwirkung wird die betreffende Blume, der Zweig, der Ast u.dgl. solange zusätzlich mit Wasser versorgt, bis der Inhalt des Wasservorratsraumes 3 aufgebraucht ist.

Bei der in Fig. 2 gezeigten weiteren Variante ist ein verbreiterter flacher Gegenstand dargestellt, wobei dem Schaumkunststoffkörper 1 durch die Ummantelung 2 die entsprechende Festigkeit gegeben wird, so daß die gewünschte Handhabung gewährleistet ist.

## Patentansprüche

1. Steckkörper als hydrophiler oder hydrophober Schaumkunststoffkörper (1) zum Anordnen von natürlichen Blumen, Zweigen, Ästen, Früchten sowie Dekorationsmaterial, wobei der Schaumkunststoffkörper (1) mit einer wasserfesten Ummantelung (2) aus Kunststoffen oder Lacken versehen ist, **dadurch gekennzeichnet, daß** im Bodenbereich zwischen Ummantelung (2) und Schaumkunststoffkörper (1) ein Wasservorratsraum (3) vorgesehen ist, der über einen Einfüllstuzten (4) mit außen verbunden ist.

2. Steckkörper nach Anspruch 1, **dadurch gekennzeichnet, daß** der Schaumkunststoffkörper (1) im Bereich seiner Oberseite (8) keine Ummantelung (2) aufweist, wobei der Schaumkunststoffkörper (1) im Bereich der fehlenden Ummantelung (2) mit einer Vertiefung (5) versehen ist.

## Claims

1. Holder body in the form of a hydrophilic or hydrophobic plastic foam body (1) for arranging natural flowers, twigs, branches, fruit and decorative materials, the plastic foam body (1) being provided with a water-tight casing (2) of plastic or lacquers, **characterised in that** a water supply space (3) is provided in the bottom area between the casing (2) and the plastic foam body (1), and communicating with the outside by a filler tube (4).

2. Holder body according to Claim 1, **characterised in that** the plastic foam body (1) has no casing in the area of its top (8), the plastic foam body (1) being provided with a depression (5) in the area of the missing casing (2).

## Revendications

1. Corps d'emmanchement sous forme de corps en mousse de plastique (1) hydrophile ou hydrophobe pour disposer des fleurs naturelles, branches, rameaux, fruits, ainsi que des matériaux décoratifs, le corps en mousse de plastique (1) étant muni d'une chemise hydrofuge (2) en matières plastiques ou vernis, **caractérisé en ce qu'**une réserve d'eau (3), reliée à l'extérieur par l'intermédiaire d'une tubulure de remplissage (4), est prévue dans la zone du fond entre la chemise (2) et le corps en mousse de plastique (1).

2. Corps d'emmanchement suivant la revendication 1, **caractérisé en ce que** le corps en mousse de plastique (1) ne présente aucune chemise dans la zone de son côté supérieur (8), le corps en mousse de plastique (1) étant muni d'une cavité (5) dans la zone de la chemise (2) manquante.
